# EUROPÄISCHE PATENTSCHRIFT

(11) **EP 1 970 233 B1**
(45) Veröffentlichungstag und Bekanntmachung des Hinweises auf die Patenterteilung: **29.06.2011**
(21) Anmeldenummer: 08004601.4
(22) Anmeldetag: 12.03.2008
(51) Int. Cl.: B60H 1/22

(54) **Einrichtung zum Konditionieren von in einen Fahrzeuginnenraum einzuleitender Luft**
Device for providing air conditioning for air fed into an automobile interior
Dispositif de conditionnement d'air entrant dans un espace intérieur de véhicule

(30) Priorität: 12.03.2007 DE 102007011814
(43) Veröffentlichungstag der Anmeldung: 17.09.2008
(73) Patentinhaber: J. Eberspächer GmbH & Co. KG, 73730 Esslingen (DE)
(72) Erfinder: Collmer, Andreas, 73773 Aichwald (DE); Haefner, Michael, 70469 Stuttgart (DE); Schlecht, Patric, 73760 Ostfildern (DE)
(74) Vertreter: Ruttensperger, Bernhard

(56) Entgegenhaltungen:
- DE-A1- 10 211 591
- DE-U- 6 604 583
- US-A- 4 203 415

## Beschreibung

Die vorliegende Erfindung betrifft eine Einrichtung zum Konditionieren von in einen Fahrzeuginnenraum einzuleitender Luft, wie sie im Oberbegriff des Anspruchs 1 definiert ist.

Eine derartige Einrichtung ist aus der DE 102 11 591 A1 bekannt. Ein beispielsweise als Aluminiumgussteil hergestellter, langgestreckter Wärmetauscherkörper ist in einem Luftführungsgehäuse so angeordnet, dass er mit seinen beiden Endbereichen jeweils nahe einander gegenüberliegender Gehäusewandungen des Luftführungsgehäuses liegt bzw. dort festgelegt oder abgestützt ist. An einem ersten Endbereich des Wärmetauscherkörpers ist eine Brenneranordnung vorgesehen, wobei eine Gebläsebaugruppe der Brenneranordnung außerhalb des Luftführungsgehäuses liegt. Die in der Brenneranordnung erzeugten Verbrennungsabgase treten in den langgestreckten Innenraum des Wärmetauscherkörpers ein, strömen dort vom ersten zum zweiten Endbereich und werden am zweiten Endbereich umgelenkt. Die Verbrennungsabgase strömen dann in entgegengesetzter Richtung vom zweiten Endbereich wieder zurück zum ersten Endbereich, wo ein Abgasstutzen gebildet ist, welcher die Verbrennungsabgase aus dem Innenbereich des Wärmetauscherkörpers abführt und sich bezüglich des Wärmetauscherkörpers im Wesentlichen radial erstreckt.

Die US 4,203,415 offenbart eine Brenner-Wärmetauscheranordnung, bei welcher ein brennstoffbetriebener Brenner außerhalb eines zur Wärmeübertragung dienenden bzw. einen Wärmetauscherbereich enthaltenden Gehäuses angeordnet und an dem Gehäuse festgelegt ist. Der brennstoffbetriebene Brenner weist zwei Zuführansätze auf, in welchen Leitungsverbindungen zur Zufuhr von Brennstoff einerseits und von Luft andererseits angeschlossen werden können.

Es ist die Zielsetzung der vorliegenden Erfindung, eine derartige Einrichtung zum Konditionieren von in einen Fahrzeuginnenraum einzuleitender Luft so auszugestalten, dass bei kompakter Bauart und geringem Platzbedarf auch zum Anschluss des Heizgeräts eine große Flexibilität im Einsatz gegeben ist.

Erfindungsgemäß wird diese Aufgabe gelöst durch eine Einrichtung zum Konditionieren von in einen Fahrzeuginnenraum einzuleitender Luft, wie sie im Anspruch 1 definiert ist. Diese umfasst ein Luftführungsgehäuse und ein Heizgerät mit einer Brenneranordnung und einer Wärmetauscheranordnung, wobei die Wärmetauscheranordnung einen langgestreckten, in dem Luftführungsgehäuse sich im Wesentlichen quer zur Luftströmungsrichtung erstreckenden Wärmetauscherkörper aufweist, wobei der Wärmetauscherkörper in seinem der Brenneranordnung nahe liegenden ersten Endbereich an einer ersten Gehäusewandung des Luftführungsgehäuses festgelegt ist und eine Verbrennungsabgase am ersten Endbereich aus dem Bereich des Wärmetauscherkörpers abführende Abgasführungsleitung eine Öffnung in der ersten Gehäusewandung durchsetzt, wobei die Brenneranordnung an einer Außenseite der ersten Gehäusewandung eine Gebläsebaugruppe umfasst, die bezüglich des Wärmetauscherkörpers in einer Mehrzahl bezüglich einer Längsachse des Wärmetauscherkörpers gedrehter Montagepositionen festlegbar ist.

Bei dem erfindungsgemäßen Aufbau einer Einrichtung zum Konditionieren von in einen Fahrzeuginnenraum einzuleitender Luft wird dadurch, dass die Verbrennungsabgase zweimal entlang des lang gestreckten Wärmetauscherkörpers strömen, nämlich einmal vom ersten Endbereich weg und dann wieder auf ihn zu, zunächst eine sehr gute Wärmeübertragungseigenschaft erzielt. Die wieder am ersten Endbereich aus dem langgestreckten Wärmetauscherkörper austretenden bzw. über die Abgasführungsleitung von diesem weg geführten Verbrennungsabgase treten dann seitlich aus dem Luftführungsgehäuse aus, und zwar an der Seite, wo auch die Gebläsebaugruppe angeordnet ist. Dies ermöglicht es, alle Anschlüsse für das Heizgerät an dieser Seite anzubringen, was die Montage vereinfacht. Weiter wird durch die Möglichkeit, die Gebläsebaugruppe in einer Mehrzahl von Montagepositionen bezüglich des Wärmetauscherkörpers anzubringen, die Möglichkeit geschaffen, die jeweilige gewählte Montageposition auf die Einbausituation abzustimmen, so dass ein Einsatz in einer Mehrzahl verschiedener Umgebungen möglich wird.

Der Bauraumbedarf außerhalb des Luftführungsgehäuses wird dadurch verringert werden, dass die Brenneranordnung ein Brennergehäuse umfasst, in welches die Gebläsebaugruppe Verbrennungsluft fördert, und dass von der Brenneranordnung im Wesentlichen nur die Gebläsebaugruppe außerhalb des Luftführungsgehäuses angeordnet ist.

Um das Heizgerät bzw. den langgestreckten Wärmetauscherkörper einfach und unter Bildung eines luftundurchlässigen Abschlusses im Bereich der ersten Gehäusewandung an dieser anbringen zu können, weist der Wärmetauscherkörper einen plattenartigen Montagebereich aufweist zur Positionierung an einer Innenseite der ersten Gehäusewandung des Luftführungsgehäuses.

Ein Gebläsegehäuse der Gebläsebaugruppe ist mit dem Montagebereich des Wärmetauscherkörpers bei zwischen diesen angeordneter Gehäusewandung verbunden.

Beispielsweise können wenigstens vier Montagepositionen vorgegeben sein. Weiterhin ist es vorteilhaft, wenn die Montagepositionen einen Winkel-abstand von etwa 90° zueinander aufweisen.

Es kann weiter vorgesehen sein, dass der Montagebereich den am Wärmetauscherkörper gebildeten Teil des Brennergehäuses und die Abgasführungsleitung umgibt.

In der ersten Gehäusewandung des Luftführungsgehäuses kann eine gemeinsame Öffnung für die Abgasführungsleitung und den am Wärmetauscherkörper gebildeten Teil des Brennergehäuses vorgesehen sein.

Eine stabile Halterung des Wärmetauscherkörpers im Luftführungsgehäuse kann weiter dadurch unterstützt werden, dass der Wärmetauscherkörper an seinem zweiten Endbereich in einer der ersten Gehäusewandung gegenüberliegenden zweiten Gehäusewandung des Luftführungsgehäuses abgestützt ist.

Zur Übertragung der in der Brenneranordnung bei ablaufender Verbrennung erzeugten Wärme auf die das Luftführungsgehäuse durchströmende Luft wird vorgeschlagen, dass an einem Außenumfangsbereich des Wärmetauscherkörpers eine Mehrzahl von im Wesentlichen parallel zur Luftströmungsrichtung im Luftführungsgehäuse sich erstreckenden Wärmeübertragungsrippen vorgesehen ist.

Die vorliegende Erfindung wird nachfolgend mit Bezug auf die beiliegenden Zeichnungen detailliert beschrieben. Es zeigt:
- Fig. 1: eine perspektivische Darstellung einer erfindungsgemäß aufgebauten Einrichtung;
- Fig. 2: die Einrichtung der Fig. 1 betrachtet von der Seite der Eintrittsöffnung eines Luftführungsgehäuses;
- Fig. 3: die Einrichtung der Fig. 1 in seitlicher Ansicht;
- Fig. 4: ein Detail eines Wärmetauscherkörpers der in Fig. 1 dargestellten Einrichtung.

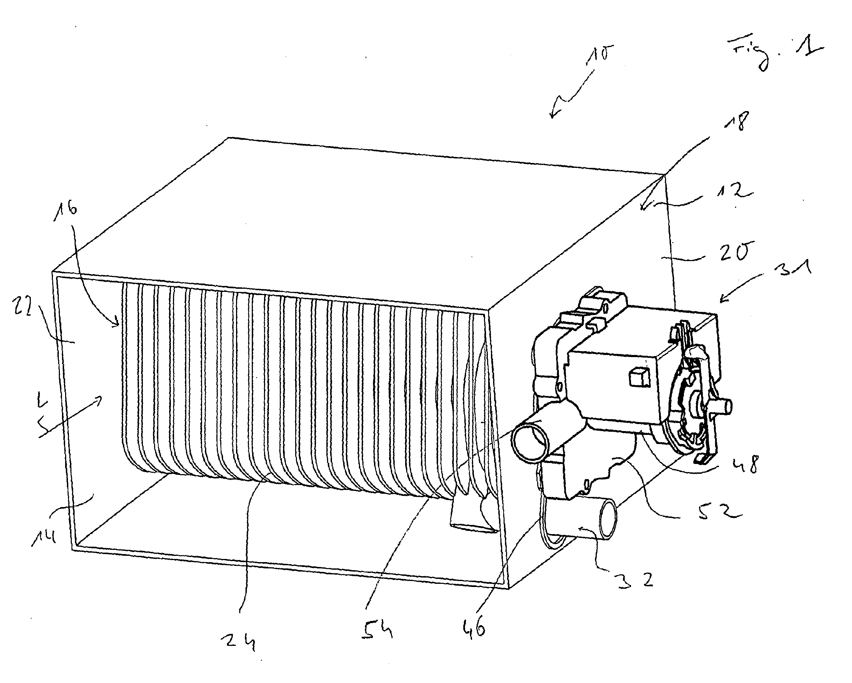

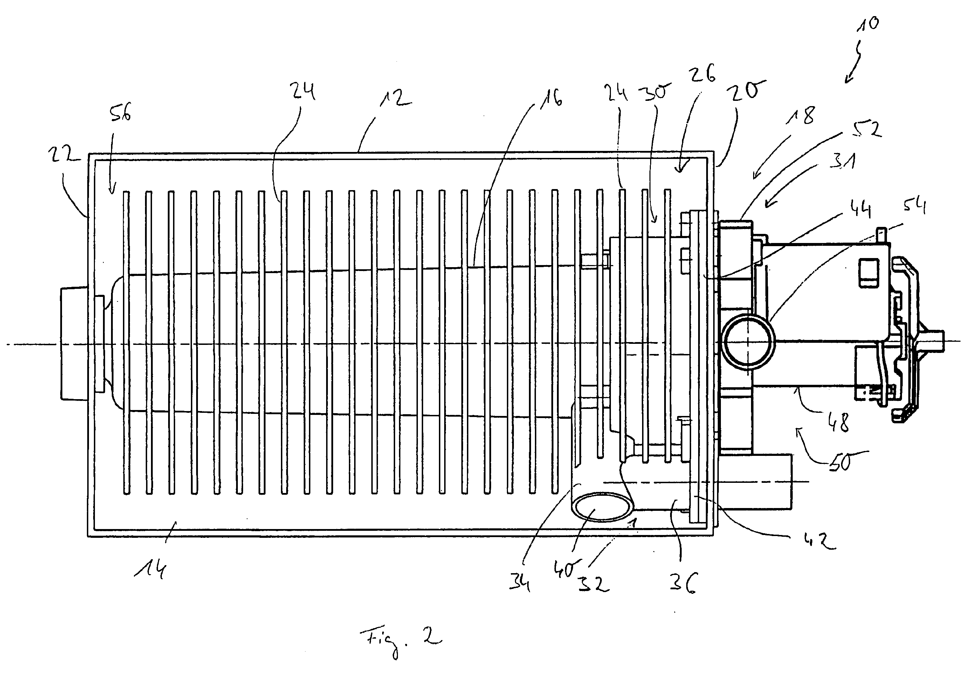

Die Fig. 1 bis 3 zeigen eine erfindungsgemäße Einrichtung 10 zum Konditionieren von in einen Innenraum eines Fahrzeugs einzuleitender Luft. Die Einrichtung 10 umfasst ein Luftführungsgehäuse 12 mit einer in den Fig. 1 und 2 erkennbaren Lufteintrittsöffnung 14. Die Luft strömt in einer Luftströmungsrichtung L, die zur Zeichenebene der Fig. 2 orthogonal steht, durch die Eintrittsöffnung 14 in das Luftführungsgehäuse 12 ein und strömt dabei auf einen langgestreckten Wärmetauscherkörper 16 eines allgemein mit 18 bezeichneten Heizgeräts zu. Der Wärmetauscherkörper 16 erstreckt sich im Wesentlichen orthogonal zur Luftströmungsrichtung L zwischen zwei einander gegenüberliegenden Gehäusewandungen 20, 22 des Wärmetauschergehäuses 12. An einer Außenseite des beispielsweise als Aluminiumgussteil gefertigen Wärmetauscherkörpers 16 sind entweder integral angeformt oder als separate Bauteile Wärmeübertragungsrippen 24 vorgesehen, deren Oberflächen parallel zur Luftströmungsrichtung L liegen, so dass die in der Luftströmungsrichtung L auf den Wärmetauscherkörper 16 bzw. die Wärmeübertragungsrippen 24 zu strömende Luft entlang der Oberfläche dieser Wärmeübertragungsrippen 24 strömt und dabei Wärme aufnehmen kann.

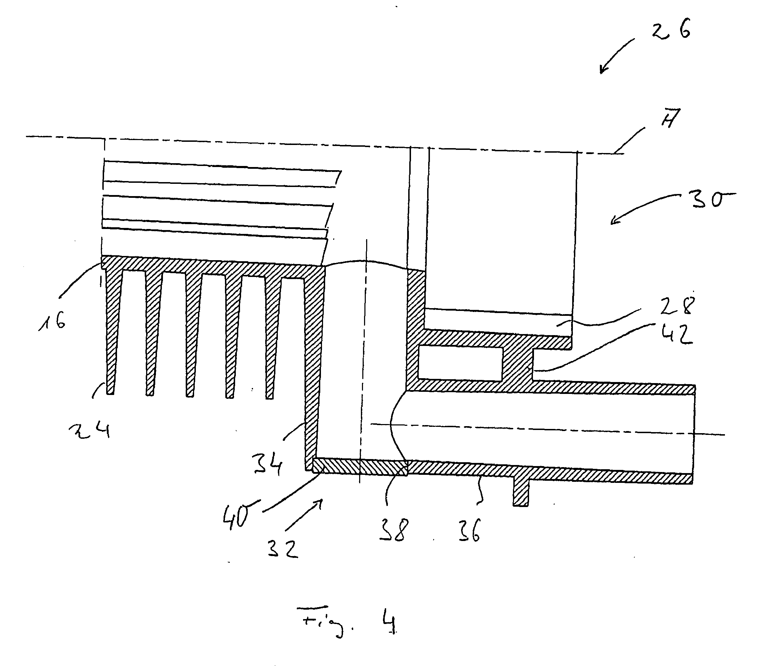

An einem ersten Endbereich 26, der in Fig. 4 vergrößert dargestellt ist, bildet der Wärmetauscherkörper 16 einen im Wesentlichen zylindrischen Teil 28 eines Brennergehäuses 30 einer allgemein mit 31 bezeichneten Brenneranordnung. Ferner ist am ersten Endbereich 26 eine Abgasführungsleitung 32 am Wärmetauscherkörper 16 ausgebildet, welche zunächst mit einem bezüglich einer Längsmittenachse A des Wärmetauscherkörpers 16 sich radial erstreckenden Abschnitt 34 vom Wärmetauscherkörper 16 weg führt und dann mit einem im Wesentlichen parallel zur Längsmittenachse A sich erstreckenden Abschnitt 36 neben dem zylindrischen Teil 28 des Brennergehäuses 30 verläuft. Um den Wärmetauscherkörper 16 in einem Gießvorgang fertigen zu können, kann am Übergang zwischen den Abschnitten 34, 36 eine Öffnung 38 vorgesehen sein, die nach Durchführung des Gießvorgangs dann mit einem Verschlusselement 40 abgasdicht verschlossen wird.

Im ersten Endbereich 26 ist am Wärmetauscherkörper 16 integral ausgebildet ein Montageflansch 42. Dieser umgibt den zylindrischen Teil 28 und den Abschnitt 36 der Abgasführungsleitung 32 und wird zur Anbringung des Wärmetauscherkörpers 16 an der Gehäusewandung 20 unter Zwischenlagerung eines beispielsweise aus gummiartigem Material aufgebauten Dichtungselements 44 an die Innenseite der Gehäusewandung 20 angelegt. In die Gehäusewandung 20 ist für den über den Montageflansch 42 sich hinaus erstreckenden Abschnitt des zylindrischen Teils 28 und auch den Abschnitt 36 der Abgasführungsleitung 32 eine Öffnung 46 gebildet, so dass dieser Abschnitt des zylindrischen Teils 28 und auch der Abschnitt 36 nach außen hervorstehen können, wobei jedoch durch die Zwischenlagerung des Dichtungselements 44 hier ein Austritt von im Luftführungsgehäuse 12 strömender Luft nicht möglich ist.

An einer Außenseite der Gehäusewandung 20 des Luftführungsgehäuses 12 ist eine Gebläsebaugruppe 48 der Brenneranordnung 31 des Heizgeräts 18 vorgesehen. Diese beispielsweise als Seitenkanalgebläse aufgebaute Gebläsebaugruppe 48 liegt mit einem auch den Seitenkanal dann enthaltenden Gebläsegehäuse 52 beispielsweise an der Außenseite der Gehäusewandung 20 an. Ein seitlich von diesem Gebläsegehäuse 42 weg führender und sich somit näherungsweise orthogonal zur Längsmittenachse A erstreckender Einlassstutzen 54 ermöglicht den Eintritt von durch die Gebläsebaugruppe 48 zu fördernder Verbrennungsluft. In dem zumindest zum Teil mit dem Wärmetauscherkörper 16 integral gebildeten Brennergehäuse 30 ist eine Brennkammer vorgesehen, in welche die durch die Gebläsebaugruppe 48 geförderte Luft eingespeist wird, ebenso wie der über eine nicht dargestellte Brennstoffzuführleitung zugeführte Brennstoff. Diese Brennkammer kann mit porösem Verdampfermedium ausgekleidet sein, so dass durch Verteilung des flüssigen Brennstoffs darin und Abdampfung in die Brennkammer dann ein verbrennungsfähiges Gemisch aus Verbrennungsluft und Brennstoffdampf erzeugt wird. Die bei der Verbrennung entstehenden Abgase strömen dann zunächst entlang des Wärmetauscherkörpers 16 vom ersten Endbereich 26 zu einem zweiten Endbereich 56, welcher im Bereich der Gehäusewandung 22 liegt, werden dort umgelenkt, strömen dann wieder zurück zum ersten Endbereich 26, wo sie aus dem Bereich des Wärmetauscherkörpers 16 dann über die Abgasführungsleitung 32 abgeführt werden. Um diese zwei Strömungsbereiche im Wärmetauscherkörper 16 zu erlangen, kann ein langgestrecktes Trennelement in diesem vorgesehen sein, das sich vom ersten Endbereich 26 bis zum zweiten Endbereich 56 erstreckt und somit die beiden einander entgegengerichteten Strömungen von einander trennt.

Das Gebläsegehäuse 52 kann am Luftführungsgehäuse 12 oder am Wärmetauscherkörper 16 dadurch festgelegt werden, dass durch eine Mehrzahl von im Gebläsegehäuse 52 vorgesehenen Öffnungen 58, 60, 62, 64 hindurch Schraubbolzen oder dergleichen geführt werden, welche auch die Wandung 20 durchsetzen können und durch den Montageflansch 42 hindurch geführt werden können. Auf diese Art und Weise kann ein fester Verbund der Gebläsebaugruppe 48 auch mit dem Wärmetauscherkörper 16 realisiert werden. Somit ergibt sich eine Konfiguration, bei welcher an der Außenseite des Luftführungsgehäuses 12 im Wesentlichen nur die Gebläsebaugruppe 48 liegt, während alle anderen Bereiche, insbesondere der wesentliche Bereich des Brennergehäuses 30, der, wie in Fig. 2 erkennbar, ebenfalls mit Wärmeübertragungsrippen 24 umgeben ist, innerhalb des Luftführungsgehäuses 12 liegen. Dies ermöglicht es, die bei der Verbrennung entstehende Wärme sehr effizient auf die im Luftführungsgehäuse 12 strömende Luft zu übertragen. Außerhalb des Luftführungsgehäuses 12 liegen dann nur noch der über die Montageplatte 42 überstehende Abschnitt des zylindrischen Teils 28 sowie der entsprechende Bereich des Abschnitts 36 der Abgasführungsleitung 32. Dieser Bereich kann dann an ein Abgasleitungssystem angeschlossen werden, über welches die Verbrennungsabgase dann weiter aus dem Bereich eines Fahrzeugs abgeführt werden.

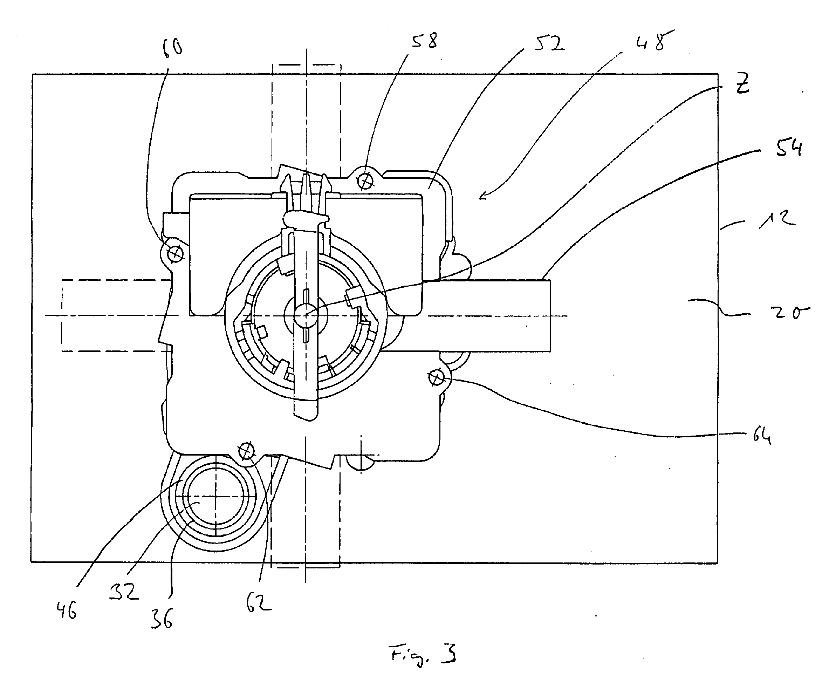

Man erkennt in Fig. 3, dass die vier Öffnungen 58, 60, 62, 64 bezüglich eines beispielsweise im Bereich der Längsmittenachse A liegenden Zentrums Z des Gebläsegehäuses 52 symmetrisch angeordnet sind. Jeweils zwei dieser Öffnungen liegen sich paarweise und spiegelsymmetrisch gegenüber, wobei die dann betrachteten beiden Paare zueinander einen Winkelabstand von 90° aufweisen. Auf Grund dieses symmetrisch ausgebildeten Musters wird es möglich, das Gebläsegehäuse 52 und mithin die gesamte Gebläsebaugruppe 48 in verschiedenen Montagepositionen bezüglich des Wärmetauscherkörpers 16 und somit auch bezüglich des Luftführungsgehäuses 12 anzubringen. Dabei sind verschiedene Montagepositionen bezüglich einander jeweils gedreht, im dargestellten Beispiel um 90°. Je nachdem, in welcher dieser vier möglichen Montagepositionen die Gebläsebaugruppe 48 angeordnet wird, erstreckt sich der Stutzen 54 in verschiedenen Richtungen. Dies ist in Fig. 3 durch die drei zusätzlich noch mit Strichlinien eingezeichneten möglichen Positionierungen dieses Stutzens 54 erkennbar. Somit wird es möglich, durch Auswahl einer dieser möglichen Montagepositionen die Gebläsebaugruppe 48 so bezüglich des Luftführungsgehäuses 12 anzuordnen, dass sie eine optimierte Bauraumausnutzung ergibt.

Ein weiterer Vorteil der erfindungsgemäßen Einrichtung 10 ist, dass alle Anschlussbereiche und diejenigen Bereiche, die zur Montage bzw. Wartung bzw. Reparatur zugänglich sein müssen, an einer Seite des Luftführungsgehäuses 12 angeordnet sind. Dies ermöglicht auch eine größere Freiheit bei der Auswahl der Position des Heizgeräts 18 an dem Luftführungsgehäuse 12.

## Patentansprüche

1. Einrichtung zum Konditionieren von in einen Fahrzeuginnenraum einzuleitender Luft, umfassend ein Luftführungsgehäuse (12) und ein Heizgerät (18) mit einer Brenneranordnung (31) und einer Wärmetauscheranordnung, wobei die Wärmetauscheranordnung einen langgestreckten, in dem Luftführungsgehäuse (12) sich im Wesentlichen quer zur Luftströmungsrichtung (L) erstreckenden Wärmetauscherkörper (16) aufweist, wobei der Wärmetauscherkörper (16) in seinem der Brenneranordnung (31) nahe liegenden ersten Endbereich (26) an einer ersten Gehäusewandung (20) des Luftführungsgehäuses (16) festgelegt ist und eine am ersten Endbereich (26) vom Wärmetauscherkörper weg führende und Verbrennungsabgase aus dem Bereich des Wärmetauscherkörpers (16) abführende Abgasführungsleitung (32) vorgesehen ist, wobei die Brenneranordnung (31) an einer Außenseite der ersten Gehäusewandung (20) eine Gebläsebaugruppe (48) umfasst, wobei der Wärmetauscherkörper (16) einen plattenartigen Montagebereich (42) aufweist zur Positionierung an einer Innenseite der ersten Gehäusewandung (20) des Luftführungsgehäuses (12) und die Brenneranordnung (31) ein Brennergehäuse (30) umfasst, in welches die Gebläsebaugruppe (48) Verbrennungsluft fördert, **dadurch gekennzeichnet, dass** die Gebläsebaugruppe (48) bezüglich des Wärmetauscherkörpers (16) in einer Mehrzahl bezüglich einer Längsachse (A) des Wärmetauscherkörpers (16) gedrehter Montagepositionen festlegbar ist, dass die Abgasführungsleitung (32) eine Öffnung (46) in der ersten Gehäusewandung (20) durchsetzt, dass von der Brenneranordnung (31) im Wesentlichen nur die Gebläsebaugruppe (48) außerhalb des Luftführungsgehäuses (12) angeordnet ist und dass ein Gebläsegehäuse (52) der Gebläsebaugruppe (48) mit dem Montagebereich (42) des Wärmetauscherkörpers (16) bei zwischen diesen angeordneter Gehäusewandung (20) verbunden ist.

2. Einrichtung nach Anspruch 1, **dadurch gekennzeichnet, dass** wenigstens vier Montagepositionen für die Gebläsebaugruppe (48) vorgesehen sind.

3. Einrichtung nach Anspruch 1 oder 2, **dadurch gekennzeichnet, dass** die Montagepositionen einen Winkelabstand von ca. 90° bezüglich einander aufweisen.

4. Einrichtung nach einem der Ansprüche 1 bis 3, **dadurch gekennzeichnet, dass** der Wärmetauscherkörper (16) wenigstens einen Teil des Brennergehäuses (30) bildet.

5. Einrichtung nach Anspruch 4, **dadurch gekennzeichnet, dass** der Montagebereich (42) den am Wärmetauscherkörper (16) gebildeten Teil (28) des Brennergehäuses (30) und die Abgasführungsleitung (32) umgibt.

6. Einrichtung nach einem der Ansprüche 4 oder 5, **dadurch gekennzeichnet, dass** in der ersten Gehäusewandung (20) des Luftführungsgehäuses (16) eine gemeinsame Öffnung (46) für die Abgasleitung (32) und den am Wärmetauscherkörper (16) gebildeten Teil (28) des Brennergehäuses (30) vorgesehen ist.

7. Einrichtung nach einem der Ansprüche 1 bis 6, **dadurch gekennzeichnet, dass** der Wärmetauscherkörper (16) an seinem zweiten Endbereich (56) an einer der ersten Gehäusewandung (20) gegenüberliegenden zweiten Gehäusewandung (22) des Luftführungsgehäuses (12) abgestützt ist.

8. Einrichtung nach einem der Ansprüche 1 bis 7, **dadurch gekennzeichnet, dass** an einem Außenumfangsbereich des Wärmetauscherkörpers (16) eine Mehrzahl von im Wesentlichen parallel zur Luftströmungsrichtung (L) im Luftführungsgehäuse (12) sich erstreckenden Wärmeübertragungsrippen (24) vorgesehen ist.

## Claims

1. Device for conditioning air to be inserted into a vehicle interior, comprising an air guide housing (12) and a heating device (18) with a burner arrangement and a heat exchanger arrangement, the heat exchanger arrangement comprising an elongate heat exchanger body (16) extending substantially transversely to the air flow direction (L), the heat exchanger body (16) being in its first end section (26) nearby the burner arrangement (31) attached to a first housing wall (20) of said air guide housing (12), an exhaust gas guiding conduit (32) leading away from the heat exchanger body (16) and discharging combustion gases from the region of the heat exchanger body (16) being provided at the first end section (26), said burner arrangement (31) comprising a blower assembly (48) at an outside of said first housing wall (20), the heat exchanger body (16) comprising a plate-shaped mounting zone (42) for positioning at an inner side of said first housing wall (20) of the air guide housing (12) and the burner arrangement (31) comprising a burner housing (30) into which the blower assembly (48) inserts combustion air, **characterized in** the blower assembly (48) being configurable in relation to the heat exchanger body (16) in a plurality of mounting positions rotated in relation to the longitudinal axis (A) of the heat exchanger body (16), in the exhaust gas guiding conduit (32) passing through an opening (46) inside the first housing wall (20) and in the blower assembly (48) being substantially the only part of the burner arrangement (31) to be arranged outside said air guide housing (12), and in a blower housing (52) of the blower assembly (48) being connected to the mounting zone (42) of the heat exchanger body (16) when the housing wall (20) is arranged between the latter.

2. Device according to claim 1, **characterized in** at least four mounting positions being provided for the blower assembly (48).

3. Device according to claim 1 or 2, **characterized in** the mounting positions having an angular distance of about 90° relative to each other.

4. Device according to one of claims 1 to 3, **characterized in** the heat exchanger body (16) forming at least a part of the burner housing (30).

5. Device according to claim 4, **characterized in** the mounting zone (42) surrounding the part (28) of the burner housing (30) formed at the heat exchanger body (16) and the exhaust gas guiding conduit (32).

6. Device according to one of claims 4 or 5, **characterized in** a common opening (46) for said exhaust gas guiding conduit (32) and said part (28) of the burner housing (30) formed at the heat exchanger body (16) being provided in the first housing wall (20) of said air guide housing (12).

7. Device according to one of claims 1 to 6, **characterized in** the heat exchanger body (16) being supported with its second end section (56) at a second housing wall (22) of the air guide housing (12) opposite the first housing wall (20).

8. Device according to one of claims 1 to 7, **characterized in** a plurality of heat transfer ribs (24) extending inside the air guide housing (12) in parallel to the air flow direction (L) being provided at an outer circumferential section of the heat exchanger body (16).

## Revendications

1. Dispositif pour conditionner l'air à insérer dans l'intérieur d'un véhicule, comprenant un boîtier de guidage d'air (12) et un appareil de chauffage (18) avec un arrangement de brûleur (31) et un arrangement d'échangeur de chaleur, l'arrangement d'échangeur de chaleur comprenant un corps d'échangeur de chaleur (16) allongé s'étendant dans le boîtier de guidage d'air (12), en substance transversalement au sens d'écoulement de l'air (L), le corps d'échangeur de chaleur (16) étant attaché dans sa première section terminale (26) près de l'arrangement de brûleur (31) à un premier paroi de boîtier (20) du boîtier de guidage d'air (12), et un conduit de guidage de gaz d'échappement (32) étant prévu s'éloignant du corps d'échangeur de chaleur (16) dans la première section terminale (26) et évacuant des gaz de combustion de la région du corps d'échangeur de chaleur (16), l'arrangement de brûleur (31) comprenant un module de ventilation (48), le corps d'échangeur de chaleur (16) comprenant une région de montage en forme de plaque (42) pour le positionnement à un côté intérieur du premier paroi de boîtier (20) du boîtier de guidage d'air (12), et l'arrangement de brûleur (31) comprenant un boîtier de brûleur (30) dans lequel l'air de combustion est inséré par le module de ventilation (48), **caractérisé par** le module de ventilation (48) étant apte à être attaché relatif au corps d'échangeur de chaleur (16) dans une pluralité de positions de montage pivotées en relation à un axe longitudinal (A) du corps d'échangeur de chaleur (16), par le conduit de guidage de gaz d'échappement (32) passant à travers une ouverture (46) dans le premier paroi de boîtier (20), par seul le module de ventilation (48), en tant que composant de l'arrangement de brûleur (31), étant arrangé en dehors du boîtier de guidage d'air (12) et par un boîtier de ventilation (52) du module de ventilation (48) étant connecté à la région de montage (42) du corps d'échangeur de chaleur (16), le paroi de boîtier (20) étant arrangé entre ces derniers.

2. Dispositif selon la revendication 1, **caractérisé par** au moins quatre positions de montage étant prévues pour le module de ventilation (48).

3. Dispositif selon les revendications 1 ou 2, **caractérisé par** les positions de montage ayant une distance angulaire d'environ 90 l'un à l'égard de l'autre.

4. Dispositif selon les revendications 1 à 3, **caractérisé par** le corps d'échangeur de chaleur (16) formant au moins une partie du boîtier de brûleur (30).

5. Dispositif selon la revendication 4, **caractérisé par** la région de montage (42) encerclant la partie (28) du boîtier de brûleur (30) formée au corps d'échangeur de chaleur (16) et le conduit de guidage de gaz d'échappement (32).

6. Dispositif selon une des revendications 4 ou 5, **caractérisé par** une ouverture commune (46) pour le conduit de guidage de gaz d'échappement (32) et la partie (28) du boîtier de brûleur (30) formée au corps d'échangeur de chaleur (16) étant prévue dans le premier paroi de boîtier (20) du boîtier de guidage d'air (12).

7. Dispositif selon une des revendications 1 à 6, **caractérisé par** le corps d'échangeur de chaleur (16) étant supporté avec sa deuxième section terminale (56) à un deuxième paroi de boîtier (22) du boîtier de guidage d'air (12) face au premier paroi de boîtier (20).

8. Dispositif selon une des revendications 1 à 7, **caractérisé par** une pluralité de renforts de transmission de chaleur (24) s'étendant parallèlement au sens d'écoulement de l'air (L) dans le boîtier de guidage d'air (12) étant prévus dans une région circonférentielle extérieure du corps d'échangeur de chaleur (16).
